# EUROPEAN PATENT APPLICATION

(11) **EP 4 618 397 A1**
(43) Date of publication of application: **17.09.2025**
(21) Application number: 24163871.7
(22) Date of filing: 15.03.2024
(51) Int. Cl.: H02M 7/06, H02J 3/01, H02M 5/45, H02M 5/458, H02M 7/162, H02M 1/12, H02M 7/17, H02M 5/14

(54) **CONNECTOR DEVICE, METHOD FOR CONTROLLING A POWER FLOW TO A DC LOAD WITH A CONNECTOR DEVICE**

(71) Applicant: Hitachi Energy Ltd, 8050 Zürich (CH)
(72) Inventor: KHAN, Akif Zia, 31-41 Krakow (PL); JOHANSSON, Nicklas, 72246 Västerås (SE); ZHANG, Weichi, Beijing 100015 (CN); LIU, Bochen, 72461 Västerås (SE); JAYAN, Vijesh, 72359 Västerås (SE); ALVES, Roberto, 72214 Västerås (SE); YUAN, ChunMing, Beijing 100062 (CN); SVENSSON, Jan, 72346 Västerås (SE)
(74) Representative: Epping - Hermann - Fischer

(57) **Abstract**

A connector device (1) is specified configured to connect an alternating current, AC, power grid (2) to a direct current, DC, load (3), comprising
- a multi-winding transformer (4) configured to be connected to the AC power grid (2),
- a series voltage injection transformer (8) connected to the multi-winding transformer (4),
- an AC/AC converter (13) connected to the series voltage injection transformer (8), and
- a rectifier (17) connected to the series voltage injection transformer (8) configured to be connected to the DC load (3) .

Furthermore, a method for controlling a power flow is specified.

## Description

The present disclosure relates to a connector device and to a method for controlling a power flow to a DC load with a connector device.

A typical hydrogen electrolyzer is normally a low voltage and/or high current DC load that is fed by a power electronic converter that performs a transformation of an AC grid voltage to a DC voltage. Typical power electronic converter topologies for large-scale green hydrogen production are based on multi-pulse thyristor rectifier circuits. However, due to harmonic generation and the reactive power consumption of thyristor rectifiers, these rectifiers cause power quality problems, resulting in requirement of additional apparatuses and thus resulting in increased system cost and increased footprint to address the power quality issues and meet the grid code requirements for a large-scale electrolyzer plant.

Embodiments of the disclosure relate to a connector device. A further embodiment relates to a method with such a connector device.

This is achieved by the subject-matter of the independent claims. Further embodiments are evident from the dependent claims and the following description.

A connector device is described. The connector device is configured to connect an alternating current, AC, power grid to a direct current, DC, load. The AC power grid is in particular configured to transmit power from at least one power plant to at least one load. The DC load is, for example, configured to be provided with the power of the AC power grid. The connector device is particularly configured to convert AC power of the AC power grid to DC power of the DC load.

According to an embodiment, the connector device comprises a multi-winding transformer configured to be connected to the AC power grid. The multi-winding transformer is configured for voltage transformation, impedance matching, phase shifting, and/or electrical isolation.

The multi-winding transformer exemplarily comprises at least two windings. In particular, the at least two windings are connected to one another. "Connected to one another" means here that the at least two windings are magnetically coupled. For example, each winding in a multi-winding transformer has a different number of turns, a different wire size, and/or a different insulation level. For example, one of the windings, in particular a single winding, of the multi-winding transformer, is connected to the AC power grid. This one of the windings is configured to receive the AC power of the AC power grid.

According to the embodiment, the connector device comprises a series voltage injection transformer connected to the multi-winding transformer. The series voltage injection transformer is connected to one of the windings, in particular to a single winding, of the multi-winding transformer facing away from the AC power grid.

Exemplarily, the series voltage injection transformer is configured to receive at least a portion of the AC power from the multi-winding transformer. Exemplarily, the series voltage injection transformer is configured to inject a compensating voltage to parallel connection lines, which is in particular configured to receive at least one other portion of the AC power from the multi-winding transformer.

Advantageously, using the series voltage injection transformer can help to stabilize the voltage profile, reduce voltage fluctuations, and improve the quality of power delivered to the DC load. Also an additional degree-of-freedom is added to the design of a fractional power converter.

According to the embodiment, the connector device comprises an AC/AC converter connected to the series voltage injection transformer. Exemplarily, the connector device comprises several AC/AC converters, e.g. at least two AC/AC converters. The AC/AC converters are in particular connected in parallel. Advantageously, future requirements of DC loads, e.g. hydrogen electrolysers, with a very high current rating can be met.

Exemplarily, the AC/AC converter is connected to the series voltage injection transformer. In particular the AC/AC converter is connected to the parallel connection lines, which is in particular configured to receive the at least one other portion of the AC power from the multi-winding transformer.

The AC/AC converter exemplarily comprises at least two converters, in particular at least two power semiconductor converters. Exemplarily, one of the two converters is a shunt converter and the other one of the two converters is a series converter. The two converters are connected to one another, particularly in series, exemplarily by a DC link.

According to the embodiment, the connector device comprises a rectifier connected to the series voltage injection transformer, configured to be connected to the DC load. The rectifier is configured to convert the AC power into a DC power usable by the DC load. The rectifier is configured to provide a current flow in one direction only, in particular in the direction of the DC load.

Exemplarily, the rectifier is a diode bridge rectifier. The diode bridge rectifier comprises, for example, several diodes arranged in a bridge configuration, e.g. at least six diodes arranged in a bridge configuration in particular for a three-phase configuration.

Advantageously, the connector device disclosed herein offers a unique and versatile solution for feeding and regulating power to DC loads without affecting the power quality of the AC power grid, while simultaneously providing grid services like reactive power support and active harmonics filtering without the need for any additional power conditioning devices.

Moreover, the connector device advantageously comprises the AC/AC converter with a comparatively lower rating. Advantageously, in particular, only a fraction of the power of rated load power is needed to regulate the power through the DC loads, rendering a high-efficiency operation and a compact footprint solution. Furthermore, the presence of a series voltage injection transformer between the AC/AC converter and the DC load offers an additional degree-of-freedom in the design of the AC/AC converter, allowing the power semiconductor converters of the AC/AC converter to be effectively utilized without much de-rating.

According to a further embodiment, the multi-winding transformer comprises at least two windings, namely a primary winding and a secondary winding. Exemplarily, the multi-winding transformer comprises exactly two windings, i.e. the primary winding and the secondary winding.

According to a further embodiment, the primary winding is configured to be connected to the AC power grid.

According to a further embodiment, the secondary winding is connected to the series voltage injection transformer. In particular, the secondary winding provides the AC power of the AC power grid from the primary winding to the series voltage injection transformer.

According to a further embodiment, the series voltage injection transformer comprises at least one transformer device. The series voltage injection transformer can comprise exactly one transformer device, wherein the transformer device is in particular a three-phase transformer device. The series voltage injection transformer can comprise at least three transformer devices, in particular exactly three transformer devices.

In particular, when the series voltage injection transformer comprises at least three transformer devices, each transformer device has a primary coil, e.g. an input coil, and a secondary coil, e.g. an output coil. In particular, the primary coil and the secondary coil are connected through electromagnetic induction. Exemplarily, the primary coil is directly connected to the multi-winding transformer. Exemplarily, the secondary coil is directly connected to the switch element.

According to a further embodiment, the series voltage injection transformer comprises a switch element connected to the at least one transformer device in parallel. The switch element is, for example, a mechanical switch, such as a contactor, or a power electronic switch, exemplarily comprising at least one power semiconductor switch, or a combination thereof.

According to a further embodiment, the AC/AC converter comprises an AC/DC converter and a DC/AC converter connected in series. Each AC/DC converter and DC/AC converter comprise at least one semiconductor switching device, for example. In particular, the semiconductor switching device is an insulated-gate bipolar transistor, IGBT, or a metal-oxide-semiconductor field-effect transistor, MOSFET.

According to a further embodiment, the DC/AC converter is connected to the series voltage injection transformer on a side of the switch element.

According to a further embodiment, the AC/DC converter is connected to the DC/AC converter by a DC link. The DC link comprises a capacitor, for example. The capacitor is configured, for example, for storing electrical energy.

Advantageously, the capacitor is configured to smooth out voltage ripples and fluctuations, ensuring a stable DC voltage supply.

According to a further embodiment, an energy storage is connected to the DC link. Exemplarily, the energy storage is connected directly to the DC link. Alternatively, the energy storage is connected to the DC link via a further DC/DC converter.

According to a further embodiment, the AC/DC converter is connected to at least three connection lines between the multi-winding transformer and the series voltage injection transformer. In this embodiment, the AC/DC converter is configured to be the shunt converter and the DC/AC converter is configured to be the series converter.

According to a further embodiment, the AC/AC converter is connected to at least three further connection lines between the series voltage injection transformer and the rectifier. In this embodiment, the AC/DC converter is configured to be the series converter and the DC/AC converter is configured to be the shunt converter.

According to a further embodiment, the multi-winding transformer comprises at least three windings, namely the primary winding, the secondary winding, and a tertiary winding. Exemplarily, the multi-winding transformer comprises exactly three windings, i.e. the primary winding, the secondary winding and the tertiary winding.

According to a further embodiment, the tertiary winding is connected to the AC/AC converter. In this embodiment, the secondary winding is directly connected to the series voltage injection transformer, in particular the primary coils. In particular, the tertiary winding is directly connected to the AC/AC converter, in particular the AC/DC converter. Exemplarily, the tertiary winding provides the AC power of the AC power grid from the primary winding to the AC/AC converter.

According to a further embodiment, the tertiary winding is connected to a further series voltage injection transformer and to a further AC/AC converter connected to the further series voltage injection transformer. In particular, the further series voltage injection transformer and the further AC/AC converter are each embodied as the series voltage injection transformer and the AC/AC converter such that all features in connection with the series voltage injection transformer and the AC/AC converter are also applicable with the further series voltage injection transformer and the further AC/AC converter.

According to a further embodiment, a further rectifier is connected to the further series voltage injection transformer. In particular, the further rectifier is embodied as the rectifier such that all features in connection with the rectifier are also applicable with the further rectifier.

According to a further embodiment, the further rectifier is configured to be connected to a further DC load. In particular, the further DC load is embodied as the DC load such that all features in connection with the DC load are also applicable with the further DC load. Exemplarily, the DC load and the further DC load are electrically and spatially separated from one another.

According to a further embodiment, the rectifier and the further rectifier are connected to one another and are configured to be connected to the DC load. Exemplary, the DC load and the further DC load are electrically connected to one another and spatially separated from one another. Exemplarily, the rectifier and the further rectifier are connected in parallel or the rectifier and the further rectifier in series.

According to a further embodiment, the load is a hydrogen electrolyzer. Exemplarily, for hydrogen electrolyzer applications, a voltage regulation range UD on the load side is quite narrow, while the current regulation range ID is very wide, e.g., a voltage V and current I range at end-of-life, EoL, is 483 V ≤ UD ≤ 600 V, 3840 A ≤ ID ≤ 9640 A).

Advantageously, the connector device is modular, adaptable to electrolyzers from different manufacturers and easily scalable, making its application for a large-scale hydrogen electrolyzer plant attractive.

According to a further embodiment, the load is an energy storage. The energy storage is, for example, configured to be charged via the rectifier. Exemplarily, the energy storage is comprised by an electric vehicle.

A further embodiment relates to a method for controlling a power flow to a DC load with a connector device, particularly the connector device described herein before. Therefore, the features as described in connection with the connector device are also applicable for the method and vice versa.

According to an embodiment, controlling a DC voltage output of the rectifier is dependent on an AC voltage input to the rectifier, such that the power flow to a DC load is controlled.

According to a further embodiment of the method, an operation profile of the DC load is provided.

According to a further embodiment of the method, the operation profile is divided in three operating regions dependent on loading conditions of the DC load.

According to a further embodiment of the method, for two of the regions corresponding to a light load condition and a heavy load condition, respectively, the power flow is regulated by means of a voltage magnitude control of an injected voltage of the series voltage injection transformer.

According to a further embodiment of the method, for one of the regions corresponding to a medium load condition, the power flow is regulated by means of an injected voltage phase-angle control of the series voltage injection transformer.

A further embodiment relates to a computer program comprising instructions which, when the computer program is executed by a computing device, cause the computer program to execute the method described herein above. In particular, the computer program can be implemented as hardware control, software control and/or firmware control or combinations thereof.

A further embodiment relates to a computer-readable storage medium on which the computer program product described herein above is stored.

The accompanying Figures are included to provide a further understanding. In the Figures, elements of the same structure and/or functionality may be referenced by the same reference signs. It is to be understood that the embodiments shown in the Figures are illustrative representations and are not necessarily drawn to scale.

Figures 1, 2, 3, 4 and 5 each schematically show a connector device according to an exemplary embodiment.

Figure 6 schematically shows a connector device controlled by a method according to an exemplary embodiment.

Figure 7 schematically shows a diagram with different regions used by a method according to an exemplary embodiment.

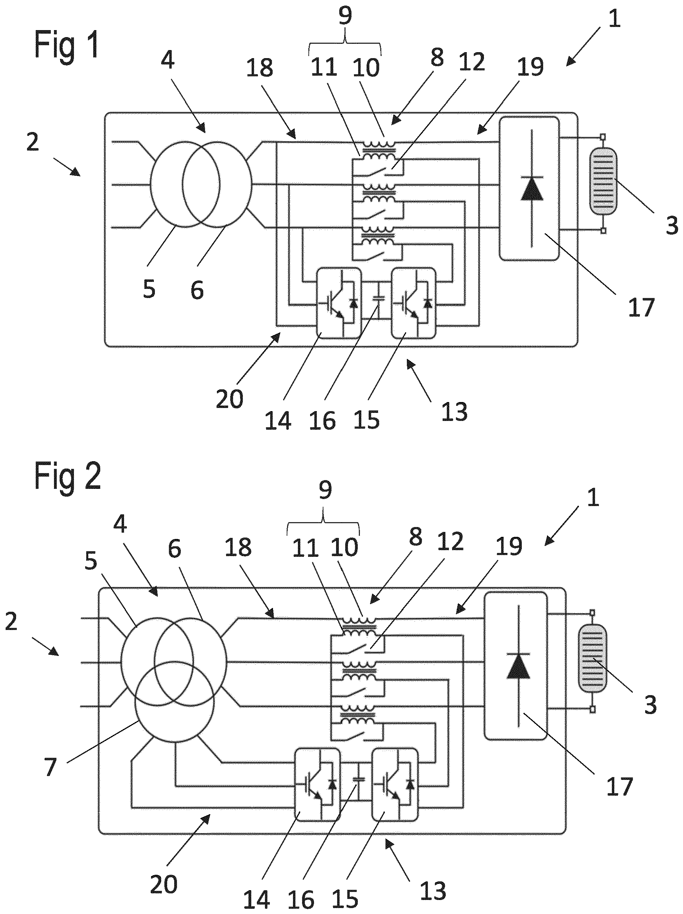

The connector device 1 according to the exemplary embodiment of Figure 1 comprises a multi-winding transformer 4 configured to be connected to an AC power grid 2 and connected to a series voltage injection transformer 8 by a connection line.

The multi-winding transformer 4 comprises a primary winding 5 facing the AC power grid 2 and a secondary winding 6 facing the connection line. The series voltage injection transformer 8 comprises three transformer devices 9. Each of the three transformer devices 9 comprises a primary coil 10 and a secondary coil 11. Each primary coil 10 is connected to the secondary winding 6 by one connection line. Further, the series voltage injection transformer 8 comprises three switch elements 12. Each of the switch elements 12 are connected to one of the transformer devices 9 in parallel. In particular, each of the switch elements 12 is connected to one of the secondary coils 11 in parallel.

The connector device 1 further comprises an AC/AC converter 13 connected to the series voltage injection transformer 8, in particular in parallel to the series voltage injection transformer 8, at parallel connection lines 20. The AC/AC converter 13 comprises an AC/DC converter 14 being in particular a shunt converter and a DC/AC converter 15 being in particular a series converter. The AC/DC converter 14 is connected to the DC/AC converter 15 by a DC link 16. In particular, the DC sides of the AC/DC converter 14 and the DC/AC converter 15 face one another and are connected by the DC link 16.

The AC/DC converter 14 is connected to the connection lines 18 between the multi-winding transformer 4 and the series voltage injection transformer 8. In particular, an AC side of the AC/DC converter 14 is connected to the connection lines 18. The DC/AC converter 15 is connected to the series voltage injection transformer 8, in particular to each of the secondary coils 11, on a side facing a rectifier 17. In particular, an AC side of the DC/AC converter 15 is connected to the series voltage injection transformer 8.

The connector device 1 further comprises a rectifier 17 connected to the series voltage injection transformer 8, configured to be connected to a DC load 3. In particular, the primary coils 10 are connected to the rectifier 17, in particular via further connection lines 19.

In particular, the AC/DC converter 14, i.e. the shunt converter, is connected to the secondary winding 6. This configuration advantageously allows the use of standard two-windings transformers, resulting in cost savings. Regarding a sizing of the shunt converter, since the fundamental AC load current will always be at least approximately in phase with a voltage synthesized by series voltage injection transformer 8, the injected voltage will also be in phase with the load current and the series converter will deliver mostly active power. Therefore, the shunt converter can advantageously be sized for at least the same active power as that of the series converter plus the reactive power required to meet a unity power factor at the AC power grid 2 side. The shunt converter also advantageously is configured to cancel out low order current harmonics, thus performing active harmonics filtering. This functionality requires an overrating of the shunt converter.

In contrast to the connector device 1 of Figure 1, the connector device 1 according to the exemplary embodiment of Figure 2 comprises a multi-winding transformer 4 with a primary winding 5, a secondary winding 6 and a tertiary winding 7. The primary winding 5 is configured to be connected to the AC power grid 2. The secondary winding 6 is connected to the connection lines 18 which are connected to the series voltage injection transformer 8. In particular, each connection line is connected to one of the primary coils 10, facing the secondary winding 6. The tertiary winding 7 is connected to the AC/DC converter 14 of the AC/AC converter 13, in particular by the parallel connection lines 20.

Exemplarily, the AC/DC converter 14, i.e. the shunt converter, is connected to the tertiary winding 7 and is controlled to maintain a constant DC link voltage, regulate a reactive power exchange with the AC power grid 2, maintain a unity power factor at a point of common coupling, PCC, and cancel harmonic currents introduced by the rectifier 17.

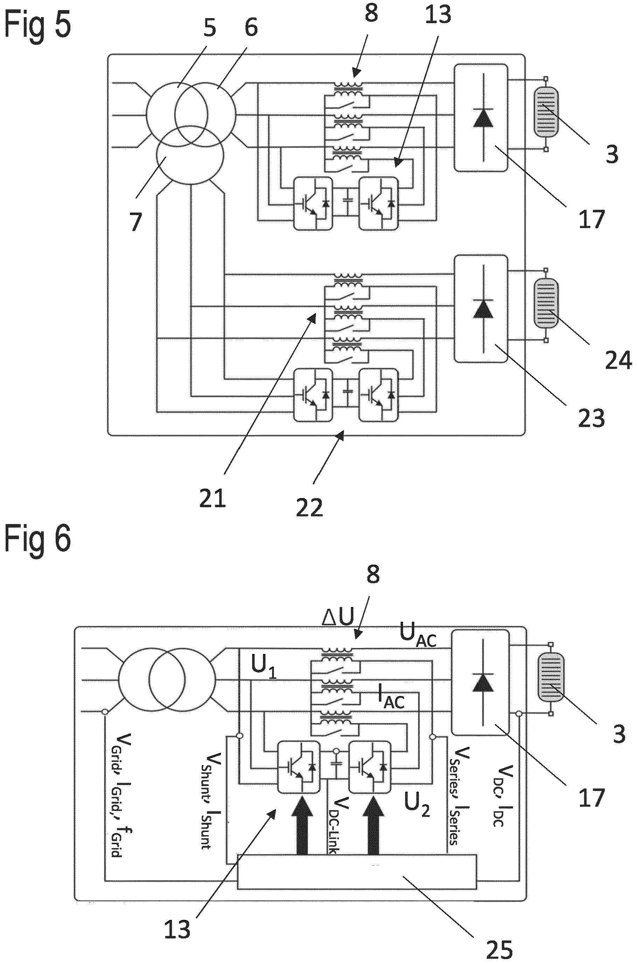

Thus, by appropriate control, as described in connection with Figure 6, the shunt converter is capable of providing advantageous grid services. A provision of an additional winding on the main transformer, e.g. the tertiary winding 7, offers an additional design variable in optimization of the sizing of the AC/AC converter 13. The series converter is connected via the series voltage injection transformer 8 to the rectifier 17 and the AC power grid 2, thus allowing the AC voltage fed to the rectifier 17 to be controlled and the DC power flow on the load side to be regulated. The series converter is in particular controlled to regulate the voltage injected to the AC line and reduce DC ripples on the load side by addition of voltage harmonics, thus flattening the top of the injected AC voltage and reducing DC filter requirements on the load side.

Advantageously, due to the presence of series voltage injection transformer 8, a turns ratio of the multi-winding transformer 4 can be leveraged to reduce current stress on the series converter and appropriately design the AC/AC converter 13 with better semiconductor utilization.

As a magnitude of the voltage to be injected by the series converter is proportional to a DC voltage regulation range of the load, which is quite narrow for a hydrogen electrolyzer, the series converter has to handle only a fraction of the rated power of the load. Utilization of this fractional power advantageously leads to lower losses during power conversion by the AC/AC converter 13 and overall to lower power losses and a compact footprint.

Exemplarily, the energy storage, e.g. a battery energy storage, BESS, is directly connected to the DC-link. This advantageously allows a rapid frequency control functionality to be delivered to the AC power grid 2 and supports the load, in particular the hydrogen electrolyzer, during a start-up and during fault conditions at the AC power grid 2 side. Exemplarily, a grid forming control, e.g. a Virtual Synchronous Machine Control, of the AC/DC converter can be included in this case to support the AC power grid voltage and frequency.

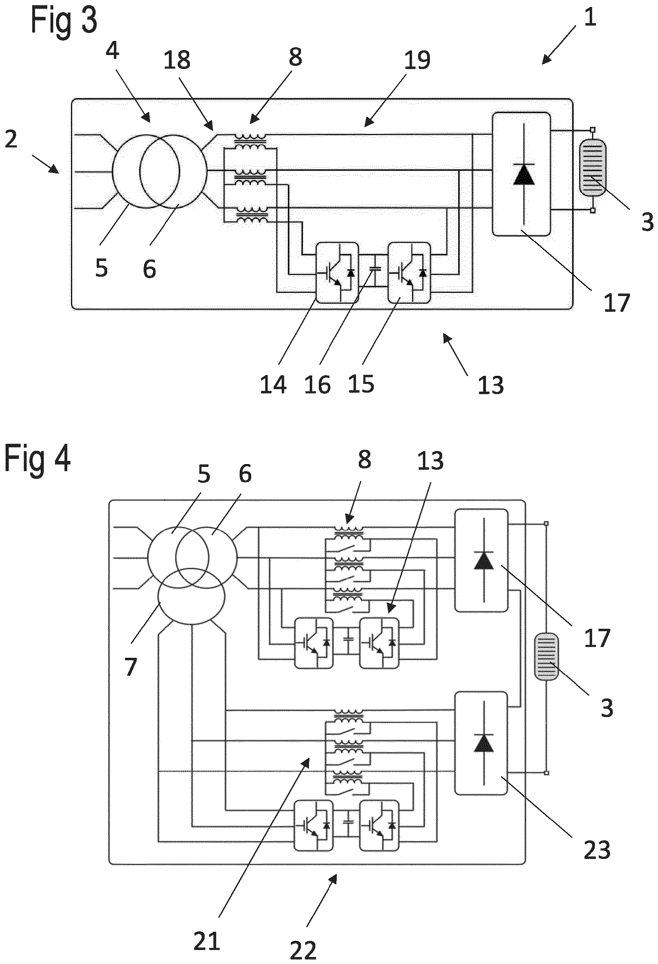

In contrast to Figure 1, the shunt converter and the series converter are interchanged in the connector device 1 according to the exemplary embodiment of Figure 3. The series voltage injection transformer 8 comprises three switch elements 12, which are not shown in Figure 3 for better representability, as shown in Figures 1 and 2.

The AC/DC converter 14 is connected to the series voltage injection transformer 8, in particular to the secondary coils 11. Particularly the AC side of the AC/DC converter 14 is connected to the series voltage injection transformer 8.

The DC/AC converter 15 is connected to the further connection lines 19, with which the series voltage injection transformer 8 is in particular connected to the rectifier 17.

In particular, the order of the series and shunt converter is replaced in contrast to Figure 1 so that current harmonics generated by the rectifier 17 are mitigated at the source of harmonics generation by an active harmonics filtering capability of the shunt converter and the harmonics current does not flow through the series voltage injection transformer 8.

In contrast to the connector device 1 of Figure 1, the connector device 1 according to the exemplary embodiment of Figure 4 comprises a multi-winding transformer 4 with a primary winding 5, a secondary winding 6 and a tertiary winding 7. The tertiary winding 7 is connected to a further series voltage injection transformer 21 and a further AC/AC converter 13, which are connected to the tertiary winding 7 in the same way as the series voltage injection transformer 8 and the AC/AC converter 13 are connected to the secondary winding 6 described in Figure 1. Furthermore, the further series voltage injection transformer 21 is connected to a further rectifier 23.

The rectifier 17 and the further rectifier 23 are connected to one another. Further, the rectifier 17 and the further rectifier 23 are connected to the load. In particular, the rectifier 17 and the further rectifier 23 are connected in series on the DC load 3 side. This configuration can advantageously result in reduced DC ripples on the DC load 3 side and will also be suitable for next-generation high voltage hydrogen electrolyzers in the future.

In contrast to Figure 4, the connector device 1 according to the exemplary embodiment of Figure 5 comprises a further load. The rectifier 17 and the further rectifier 23 are not connected to one another. The further rectifier 23 is connected to the further DC load 24.

This means that the connector device 1 according to the exemplary embodiment of Figure 5 is based on 12-pulse configuration. This configuration comprises the adding of an additional module with the further AC/AC converter and the further rectifier 23 to the tertiary winding 7 of a multi-windings transformer. This configuration can advantageously help to reduce AC harmonics filtering requirements, simplifying control, and lowering the ratings of the shunt converter.

For controlling a power flow to the DC load 3 with a connector device 1, exemplarily a connector device 1 according to Figure 1, a DC voltage output of the rectifier 17 is controlled dependent on an AC voltage input to the rectifier 17, such that the power flow to the DC load 3 is controlled.

Therefore, a controller 25 is connected to the connector device 1. The controller 25 is, for example, configured to regulate a DC load 3 voltage V_{DC} and a power flowing to the DC load 3 by controlling a magnitude of the voltage V_{Series} injected by the series voltage injection transformer 8.

The shunt converter is controlled to maintain a DC link 16 voltage V_{DC-Ling} constant, mitigate current harmonics generated by the rectifier 17 and maintain a unity power factor. Furthermore, the controller 25 is, for example, configured for frequency regulation and power oscillation damping on the AC power grid 2 side by controlling a DC side active power as a function of the AC side frequency f_{Grid}.

Exemplarily, the shunt converter and the series converter can both be individually controlled by the controller 25 via pulse width modulation, as indicated with black arrows pointing to the respective converter.

Exemplarily, for a symmetrical voltage injection method, to control the power flow to the DC load 3, the series converter is configured to inject a symmetrical bipolar voltage (ΔU = ± xV) to an AC voltage (U₁)on a side facing the secondary winding 6 so that a magnitude of a cumulative AC voltage fed to the rectifier 17 (U_{AC}) can be increased (U_{AC} = U₁ + xV) or decreased (U_{AC} = U₁ - xV) with respect to the AC voltage (U₁) on the side facing the secondary winding 6.

With the connector device 1 and/or the method, the DC voltage is advantageously regulated at the DC load 3 side while simultaneously performing active harmonics filtering and reactive power support at the AC power grid 2 side, in particular without requiring any additional power quality improvement apparatus. Advantageously, the series voltage injection transformer 8 is configured to inject the voltage on the AC side of the rectifier 17. The series voltage injection transformer 8 advantageously offers an additional degree-of-freedom in the design of the AC/AC converter 13 and helps to optimally utilize the power semiconductors without requiring much derating of the AC/AC converter.

In particular, the connector device 1 is advantageously modular and easily scalable, making it an attractive option for large-scale hydrogen electrolyzers. As the connector device 1 advantageously needs only partial rating power converters, it is cheaper compared to the conventional solutions that require full rating power converters.

Advantageously, with appropriate control, the voltage ripples on the load side and current harmonics on the grid side are reduced. This can lower filtering requirements both on the load and the grid side.

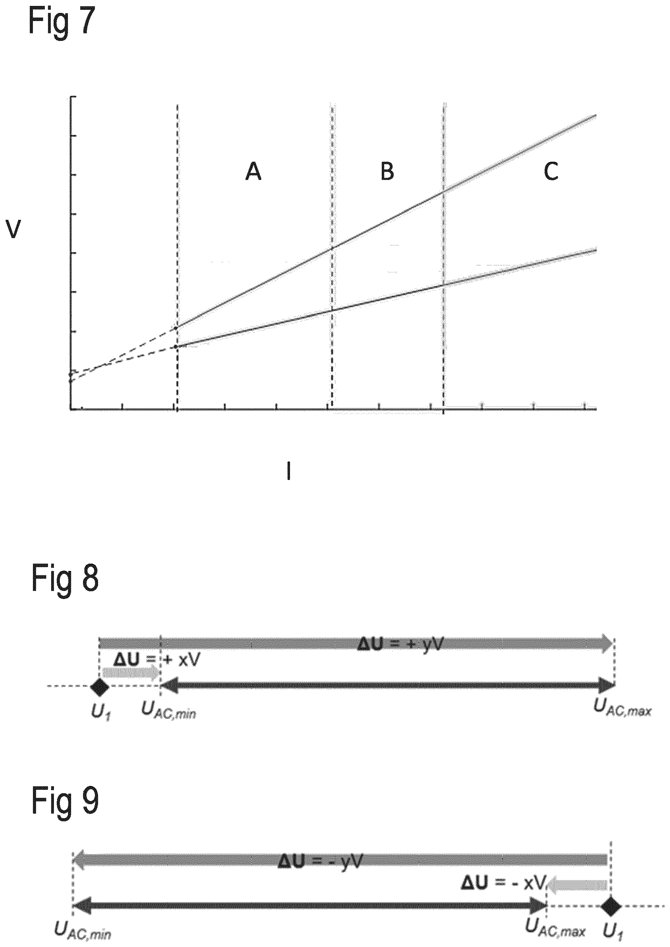

In connection with the diagram in Figure 7, with the method described in connection with Figure 6 the operation of the DC load 3 can be divided into three-distinct operating regions, namely region A, B and C as indicated in Figure 7, based on loading conditions, e.g. an operation profile of the DC load 3.

On the y-axis, a voltage of the load is indicated, and on the x-axis, a current of the load is indicated, corresponding to the operation profile of the DC load 3, in particular for two different profiles.

For regions A and C, corresponding to a light load condition and a heavy load condition respectively, the power flow is regulated by means of voltage magnitude control of the injected voltage of the series converter, e.g. an anti-phase operation, and an in-phase operation, respectively. For region B, corresponding to a medium load condition, the power flow is regulated by means of injected voltage phase-angle control of the series converter, e.g. an out-of-phase operation. For region B, the series converter also exchanges reactive power with the AC power grid 2.

The anti-phase operation is described exemplarily. For region A, the voltage injected by the series converter is in anti-phase relationship, i.e., 180° phase-shifted, e.g. out-of-phase, with respect to the AC-side voltage and the power flow to the DC load 3 is controlled by varying the voltage magnitude only. There is no reactive power exchange between the series converter and the DC load 3 and/or the AC power grid 2 in this region of operation.

The out-of-phase-operation is described exemplarily. For region B, a phase-angle of the voltage injected by the series converter is varied while the magnitude of the injected voltage is kept constant at a pre-specified level corresponding to a minimum value of realizable modulation index. This is done to prevent the operation of the series converter at a very low modulation index and in the vicinity of the zero-voltage range of the series converter, which is practically unachievable. As the phase-angle of the injected voltage is varied in this mode of operation while keeping the voltage magnitude constant, the series converter also exchanges active and reactive power with the AC power grid in this mode of operation.

The in-phase operation is described exemplarily. For region C, the voltage injected by the series converter is in phase with respect to the AC-side voltage and the power flow to the DC load 3 is controlled by varying the voltage magnitude only. There is no reactive power exchange between the series converter and the DC load 3 and/or AC power grid 2 in this region of operation.

Exemplarily, for an asymmetrical voltage injection method, the series converter is configured to be in either an in-phase relationship or an anti-phase relationship for all of the loading conditions of the rectifier 17. For the case where the series converter is operated in the in-phase relationship only, the voltage U₁ is selected to be lower than a minimum AC voltage requirement U_{AC,min} of the rectifier 17 so that the series converter can effectively step up U₁ by ΔU where ΔU varies from +xV to +yV as shown in Figure 8.

For the case where the series converter is only operated in the anti-phase relationship, the voltage U₁ is selected to be higher than a maximum AC voltage requirement U_{AC,max} of the rectifier 17 so that the series converter can effectively step down U₁ by ΔU where ΔU varies from -xV to -yV as shown in Figure 9.

As the ratings of the series converter and the series voltage injection transformer 8 are proportional to the magnitude of the injected voltage, this control method results in higher power ratings of the series converter as compared to the symmetrical voltage injection method.

The embodiments and exemplary embodiments described herein above can be combined accordingly.

### Reference Signs

- 1: connector device
- 2: power grid
- 3: DC load
- 4: multi-winding transformer
- 5: primary winding
- 6: secondary winding
- 7: tertiary winding
- 8: series voltage injection transformer
- 9: transformer device
- 10: primary coil
- 11: secondary coil
- 12: switch element
- 13: AC/AC converter
- 14: AC/DC converter
- 15: DC/AC converter
- 16: DC link
- 17: rectifier
- 18: connection lines
- 19: further connection lines
- 20: parallel connection lines
- 21: further series voltage injection transformer
- 22: further AC/AC converter
- 23: further rectifier
- 24: further DC load
- 25: controller

## Claims

1. Connector device (1) configured to connect an alternating current, AC, power grid (2) to a direct current, DC, load (3), comprising
- a multi-winding transformer (4) configured to be connected to the AC power grid (2),
- a series voltage injection transformer (8) connected to the multi-winding transformer (4),
- an AC/AC converter (13) connected to the series voltage injection transformer (8), and
- a rectifier (17) connected to the series voltage injection transformer (8) configured to be connected to the DC load (3) .

2. Connector device (1) according to claim 1, wherein
- the multi-winding transformer (4) comprises at least two windings, namely a primary winding (5) and a secondary winding (6),
- the primary winding (5) is configured to be connected to the AC power grid (2), and
- the secondary winding (6) is connected to the series voltage injection transformer (8).

3. Connector device (1) according to one of the claims 1 or 2, wherein
- the series voltage injection transformer (8) comprises at least one transformer device (9), and
- the series voltage injection transformer (8) comprises a switch element (12) connected to the at least one transformer device (9) in parallel.

4. Connector device (1) according to one of claims 1 to 3, wherein
- the AC/AC converter (13) comprises an AC/DC converter (14) and a DC/AC converter (15) connected in series.

5. Connector device (1) according to claims 3 and 4, wherein
- the DC/AC converter (15) is connected to the series voltage injection transformer (8) on a side of the switch element (12) .

6. Connector device (1) according to one of claims 4 or 5, wherein
- the AC/DC converter (14) is connected to the DC/AC converter (15) by a DC link (16).

7. Connector device (1) according to claim 6, wherein
- an energy storage is connected to the DC link (16).

8. Connector device (1) according to one of claims 5 to 7, wherein
- the AC/DC converter (14) is connected to at least three connection lines (18) between the multi-winding transformer (4) and the series voltage injection transformer (8), or
- the AC/AC converter (13) is connected to at least three further connection lines (19) between the series voltage injection transformer (8) and the rectifier (17).

9. Connector device (1) according to one of claims 2 to 7, wherein
- the multi-winding transformer (4) comprises at least three windings, namely the primary winding (5), the secondary winding (6), and a tertiary winding (7), and
- the tertiary winding (7) is connected to the AC/AC converter (13).

10. Connector device (1) according to one of claims 2 to 7, wherein
- the multi-winding transformer (4) comprises at least three windings, namely the primary winding (5), the secondary winding (6) and a tertiary winding (7), and
- the tertiary winding (7) is connected to a further series voltage injection transformer (8) and to a further AC/AC converter (22) connected to the further series voltage injection transformer (21), and
- a further rectifier (23) is connected to the further series voltage injection transformer (21).

11. Connector device (1) according to claim 10, wherein
- the further rectifier (23) is configured to be connected to a further DC load (24).

12. Connector according to claim 10, wherein
- the rectifier (17) and the further rectifier (23) are connected to one another and are configured to be connected to the DC load (3).

13. Connector device (1) according to one of claims 1 to 12, wherein
- the load is a hydrogen electrolyzer, or
- the load is an energy storage.

14. Method for controlling a power flow to a DC load (3) with a connector device (1) according to one of claims 1 to 13, comprising:
- controlling a DC voltage output of the rectifier (17) dependent on an AC voltage input to the rectifier (17), such that
- the power flow to the DC load (3) is controlled.

15. Method according to claim 14, comprising:
- providing an operation profile of the DC load (3),
- dividing the operation profile in three operating regions dependent on loading conditions of the DC load (3),
- for two of the regions corresponding to a light load condition and a heavy load condition, respectively, the power flow is regulated by means of a voltage magnitude control of an injected voltage of the series voltage injection transformer (8), and
- for one of the regions corresponding to a medium load condition, the power flow is regulated by means of an injected voltage phase-angle control of the series voltage injection transformer (8).
